# EUROPEAN PATENT APPLICATION

(11) **EP 4 138 442 A1**
(43) Date of publication of application: **22.02.2023**
(21) Application number: 20933351.7
(22) Date of filing: 29.04.2020
(51) Int. Cl.: H04W 28/00

(54) **COMMUNICATION METHOD AND APPARATUS**

(71) Applicant: Huawei Technologies Co., Ltd., Shenzhen, Guangdong 518129 (CN)
(72) Inventor: LIU, Hang, Shenzhen, Guangdong 518129 (CN); WANG, Jian, Shenzhen, Guangdong 518129 (CN)
(74) Representative: Körber, Martin Hans
(86) International application number: PCT/CN2020/087926
(87) International publication number: WO 2021/217534

(57) **Abstract**

This application relates to the intelligent cockpit field and provides a communication method and apparatus, to reduce communication interference between devices. In this application, if priorities of one or more second devices are lower than a priority of a first device, the first device sends second information to the one or more second devices, where the second information includes a communication resource allocated by the first device to the one or more second devices and the priority of the first device. When the priorities of the one or more second devices are lower than the priority of the first device, the first device may allocate the communication resource to the one or more second devices. This can avoid communication interference between different communication domains that is caused by a conflict between communication resources, and improve communication performance of the devices.

## Description

### TECHNICAL FIELD

This application relates to the intelligent cockpit field, and in particular, to a communication method and apparatus.

### BACKGROUND

Vehicles play an increasingly important role in people's daily life. As intelligent cockpit technologies continuously develop, vehicles are not only transportation tools, but also one kind of living space for people. People expect an intelligent cockpit to provide them with richer entertainment, audio, video, and office experience.

Currently, devices related to the intelligent cockpit may include a cockpit domain controller (cockpit domain controller, CDC), a vehicle-mounted device such as a vehicle-mounted audio and video device (such as a vehicle-mounted microphone, a vehicle-mounted speaker, and a vehicle-mounted screen), an intelligent terminal, a wearable device, and the like. Therefore, there may be a plurality of different communication domains in an intelligent cockpit environment. For example, the CDC may be used as a primary node to schedule the vehicle-mounted audio and video device. In this case, the CDC is the primary node, and the vehicle-mounted audio and video device is a secondary node. The CDC and at least one vehicle-mounted audio and video device may form a communication domain, which may be referred to as a CDC domain. In addition, a mobile phone and an intelligent wearable device (such as a headset) may form a communication domain, which may be referred to as a mobile phone domain. In this case, the mobile phone may be used as a primary node, the intelligent wearable device may be used as a secondary node, and the mobile phone may schedule the intelligent wearable device.

When different primary and secondary nodes in a plurality of different communication domains in one intelligent cockpit perform communication at the same time, a conflict may occur between communication resources of a plurality of primary and secondary nodes. Consequently, a serious interference problem is caused, and communication performance and service performance of the nodes are further affected.

### SUMMARY

This application provides a communication method and apparatus, to allocate communication resources in different communication domains, thereby reducing communication interference.

According to a first aspect, an embodiment of this application provides a communication method. The communication method may be performed by a first device provided in this application. The first device may be a terminal device, or may be a chip applied to the terminal device, or may be a cockpit domain controller (cockpit domain controller, CDC), where the CDC may be a module in the terminal device. In the method, the first device may receive first information sent by one or more second devices. The first information may include priorities of the one or more second devices. If the priorities of the one or more second devices are lower than a priority of the first device, the first device may send second information to the one or more second devices, where the second information includes a communication resource allocated by the first device to the one or more second devices and the priority of the first device.

Based on this solution, the first device can allocate the communication resource to the one or more second devices whose priorities are lower than that of the first device. This can avoid communication interference between different communication domains that is caused by a conflict between communication resources, and improve communication performance of the devices.

In a possible implementation, before the first device sends the second information to the one or more second devices, the method further includes: The first device may allocate the communication resource to the one or more second devices, where the communication resource is to be used by the one or more second devices to schedule one or more third devices. The second devices and the one or more third devices herein may form a communication domain.

For example, the communication resource allocated by the first device to the one or more second devices may be shared by the one or more second devices. Alternatively, the first device allocates the shared communication resource to the second devices with a same priority. Alternatively, the first device may allocate a communication resource to each second device.

Based on this solution, the first device allocates the communication resource to the one or more second devices whose priorities are lower than that of the first device, so that the second devices can separately schedule the one or more third devices based on the allocated communication resource. This can avoid the conflict between the communication resources in the different communication domains, further avoid generation of communication interference, and improve communication performance of the devices.

In a possible implementation, the priorities of the one or more second devices may be identity information of the one or more second devices. The identity information herein may be represented by using a device identification code or a media access control address (media access control address, MAC). It should be understood that different fields of the identity information may have different meanings. Alternatively, the priority may be priority information. For example, the priority information may be priority indication information. For example, the priority may be indicated by using a priority identifier and by using a correspondence between a priority identifier and a priority. The correspondence may be pre-stored by the first device, or may be predetermined by the first device and the second device, or may be defined in a protocol.

In a possible implementation, the communication resource is a communication resource shared by the plurality of second devices. For example, the first device may allocate a same communication resource to all of the one or more second devices. The first device may include the allocated communication resource in the second information, and send the second information to the one or more second devices.

In another possible implementation, if the first device allocates, by using the foregoing method, the shared communication resource to the one or more second devices, the first device may notify the one or more second devices by using broadcast information.

Based on this solution, the first device can allocate the shared communication resource to the plurality of second devices whose priorities are lower than that of the first device. In this case, the first device cannot need to frequently detect whether there is the second device and a quantity of second devices. This can reduce an operation of the first device while improving communication performance.

In a possible implementation, after receiving the first information sent by the one or more second devices, the first device may determine second devices with a same priority. The first device may allocate a shared communication resource to the determined second devices with the same priority.

Based on this solution, the first device can allocate the shared communication resource to the plurality of second devices with the same priority, and the first device can allocate different communication resources to second devices with different priorities. In this way, the first device can preferably satisfy a communication resource of the second device with a relatively high priority, and ensure the communication resource of the second device with the relatively high priority.

In a possible implementation, the first device sends the second information to the one or more second devices when a first condition is met.

For example, the first condition includes: a signal strength of the first information is higher than or equal to a first signal strength threshold; or an amount of the first information is greater than or equal to a first quantity threshold; or first duration in which the first device continuously receives first information sent by a same second device is longer than or equal to a first duration threshold; or a total quantity of times that the first device receives first information sent by a same second device is greater than or equal to a first quantity-of-times threshold.

Based on this solution, the first device can send the second information to the one or more second devices when the first condition is met. When the first condition is met, it may indicate that communication interference exists in an environment. When determining that communication interference exists in the environment, the first device allocates the communication resource to the one or more second devices. This can avoid a waste of a communication resource and improve utilization of the communication resource.

In a possible implementation, the first device sends third information when determining that the first information sent by the one or more second devices is not received within a predetermined time or the signal strength of the first information is lower than a second signal strength threshold, where the third information includes the priority of the first device.

Based on this solution, the first device can send the third information to reclaim the allocated communication resource, and can allocate the communication resource to another second device. When the foregoing condition is met, the first device reclaims the allocated communication resource. This can improve utilization of the communication resource.

According to a second aspect, an embodiment of this application further provides another communication method. The method may be performed by a second device in embodiments of this application. The second device may be a terminal device, or may be a chip applied to the terminal device. A priority of the second device is lower than a priority of the first device. In the method, the second device may send first information to the first device, where the first information may include the priority of the second device. If the priority of the second device is lower than the priority of the first device, the second device may receive second information sent by the first device, where the second information includes a communication resource allocated by the first device to the second device and the priority of the first device. In this case, the second device schedules one or more third devices by using the communication resource. The one or more third devices herein may be devices that belong to a same communication domain as the first device.

Based on this solution, the second device can schedule the one or more third devices by using the communication resource allocated by the first device. This can avoid a conflict between resources in a communication domain to which the second device belongs and another communication domain, reduce communication interference, and improve communication performance.

In a possible implementation, the priority information is identity information of the second device. The identity information herein may be represented by using a device identification code or a media access control address (media access control address, MAC). It should be understood that different fields of the identity information may have different meanings.

Based on this solution, the second device can indicate the priority of the second device to the first device by using the identity information, so that the first device can allocate the communication resource to the second device based on the identity information.

In a possible implementation, the communication resource is a communication resource shared by the second device and one or more other second devices. For example, the communication resource may be a communication resource shared by the second device and other second devices whose priorities are lower than that of the first device.

Based on this solution, the second devices whose priorities are lower than that of the first device can separately schedule the one or more third devices based on the shared communication resource. This can avoid the conflict between the communication resources in the different communication domains.

In a possible implementation, the communication resource is a communication resource shared by the second device and one or more second devices with a same priority in the one or more other second devices.

Based on this solution, the second devices with the same priority can share the allocated communication resource. Therefore, the second devices with the same priority can separately schedule the one or more third devices based on the shared communication resource. This can avoid the conflict between the communication resources in the different communication domains.

In a possible implementation, the second device receives third information sent by the first device, where the third information includes priority information of the first device. The second device sends the first information to the first device. The third information herein is information used by the first device to reclaim the allocated communication resource. Therefore, when receiving the third information, the second device needs to send the first information to the first device to request for the communication resource.

Based on this solution, the first device can reclaim the allocated communication resource by using the third information. This can improve utilization of the communication resource.

According to a third aspect, a communication apparatus is provided. For beneficial effects, refer to the descriptions of the first aspect. Details are not described herein again. The communication apparatus has a function of implementing behavior in the method instance in the first aspect. The function may be implemented by hardware, or may be implemented by hardware executing corresponding software. The hardware or the software includes one or more modules corresponding to the foregoing function. In a possible design, the communication apparatus includes: a receiving module, configured to receive first information sent by one or more second devices, where the first information includes priorities of the one or more second devices; and a sending module, configured to: if the priorities of the one or more second devices are lower than a priority of the apparatus, send second information to the one or more second devices, where the second information includes a communication resource allocated by the apparatus to the one or more second devices and the priority of the apparatus. These modules may perform corresponding functions in the method example in the first aspect. For details, refer to the detailed descriptions in the method example. Details are not described herein again.

According to a fourth aspect, a communication apparatus is provided. For beneficial effects, refer to descriptions in the second aspect. Details are not described herein again. The communication apparatus has a function of implementing behavior in the method instance in the second aspect. The function may be implemented by hardware, or may be implemented by hardware executing corresponding software. The hardware or the software includes one or more modules corresponding to the foregoing function. In a possible design, the communication apparatus includes: a sending module, configured to send first information to a first device, where the first information includes a priority of the apparatus; a receiving module, configured to: if the priority of the apparatus is lower than a priority of the first device, receive second information sent by the first device, where the second information includes a communication resource allocated by the first device to the apparatus and the priority of the first device; and a processing module, configured to schedule one or more third devices by using the communication resource. These modules may perform corresponding functions in the method example in the second aspect. For details, refer to the detailed descriptions in the method example. Details are not described herein again.

According to a fifth aspect, a communication apparatus is provided. The communication apparatus may be the first device in the foregoing method embodiment, or a chip disposed in the first device. The communication apparatus includes a communications interface and a processor; and optionally, further includes a memory. The memory is configured to store a computer program or instructions. The processor is coupled to the memory and the communications interface. When the processor executes the computer program or the instructions, the communication apparatus is enabled to perform the method performed by the first device in the foregoing method embodiment.

According to a sixth aspect, a communication apparatus is provided. The communication apparatus may be the second device in the foregoing method embodiment, or a chip disposed in the second device. The communication apparatus includes a communications interface and a processor; and optionally, further includes a memory. The memory is configured to store a computer program or instructions. The processor is coupled to the memory and the communications interface. When the processor executes the computer program or the instructions, the communication apparatus is enabled to perform the method performed by the second device in the foregoing method embodiment.

According to a seventh aspect, a computer program product is provided. The computer program product includes computer program code. When the computer program code is run, the method performed by the first device in the foregoing aspects is enabled to be performed.

According to an eighth aspect, a computer program product is provided. The computer program product includes computer program code. When the computer program code is run, the method performed by the second device in the foregoing aspects is enabled to be performed.

According to a ninth aspect, this application provides a chip system. The chip system includes a processor, configured to implement functions of the first device in the method in the foregoing aspects. In a possible design, the chip system further includes a memory, configured to store program instructions and/or data. The chip system may include a chip, or may include a chip and another discrete component.

According to a tenth aspect, this application provides a chip system. The chip system includes a processor, configured to implement functions of the second device in the method in the foregoing aspects. In a possible design, the chip system further includes a memory, configured to store program instructions and/or data. The chip system may include a chip, or may include a chip and another discrete component.

According to an eleventh aspect, this application provides a computer-readable storage medium. The computer-readable storage medium stores a computer program. When the computer program is run, the method performed by the first device in the foregoing aspects is implemented.

According to a twelfth aspect, this application provides a computer-readable storage medium. The computer-readable storage medium stores a computer program. When the computer program is run, the method performed by the second device in the foregoing aspects is implemented.

### BRIEF DESCRIPTION OF DRAWINGS

FIG. 1 is a schematic diagram of a communication system in the conventional technology;
FIG. 2 is a flowchart 1 of a communication method according to an embodiment of this application;
FIG. 3 is a schematic diagram of a physical signal according to an embodiment of this application;
FIG. 4 is a schematic diagram of a communication system according to an embodiment of this application;
FIG. 5 is a flowchart 1 of a communication method according to an embodiment of this application;
FIG. 6 is a schematic diagram 1 of a structure of a communication apparatus according to an embodiment of this application; and
FIG. 7 is a schematic diagram 1 of a structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

The following describes some terms in embodiments of this application, to facilitate understanding of a person skilled in the art.
(1) Primary node and secondary node: A primary node and a secondary node are two types of nodes that are logically distinguished. The primary node has a resource scheduling capability. The primary node may schedule a time-frequency resource for the secondary node, the secondary node follows scheduling of the primary node, and the secondary node may perform communication by using the time-frequency resource scheduled by the primary node. It should be noted that attribute features of the primary node and the secondary node may change. For example, when an intelligent terminal communicates with a headset, the intelligent terminal is a primary node, and the headset is a secondary node. However, when the intelligent terminal accesses a device with a higher priority, for example, a cockpit domain controller (cockpit domain controller, CDC), and the intelligent terminal needs to follow scheduling of the CDC, an attribute feature of the intelligent terminal changes to a secondary node.
(2) Communication domain: A communication domain includes one primary node and at least one secondary node. The at least one secondary node establishes a communication connection to the primary node. The primary node may schedule a time-frequency resource for the at least one secondary node. Each secondary node may communicate with the primary node by using the scheduled time-frequency resource.
(3) Communication domain type: There may be a plurality of different communication domains in a same environment. Different communication domains may include different node types, node capabilities, node attributes, and carried services. For example, a CDC may be used as a primary node to schedule a vehicle-mounted audio device. In this case, the CDC is the primary node, and the vehicle-mounted audio device is a secondary node. The CDC and the vehicle-mounted audio device may form a communication domain, which is referred to as a CDC domain or an in-vehicle infotainment system domain. A mobile phone may be used as a primary node to schedule an intelligent wearable device. In this case, the intelligent wearable device is a secondary node, and the mobile phone and the intelligent wearable device may form a communication domain to become a mobile phone domain. The CDC domain and the mobile phone domain correspond to two different communication domain types.
(4) Priority: A priority indicates a priority of a primary node, may also be referred to as a device priority, and reflects priorities of primary nodes in different communication domains for resource scheduling or resource management. Different primary nodes may have different priorities, and a primary node with a lower priority follows resource management of a primary node with a higher priority.
(5) First device: A first device is a primary node device with a higher priority in an intelligent cockpit environment, for example, a CDC, and has a capability of allocating a communication resource to another primary node with a lower priority.
(6) Second device: A second device may be another primary node device whose priority is lower than a priority of a first device, and include a device that provides a voice and/or data connectivity for a user. Specifically, the second device includes a device that provides the voice for the user, includes a device that provides the data connectivity for the user, or includes a device that provides the voice and the data connectivity for the user. For example, the second device may include a handheld device having a wireless connection function or a processing device connected to a wireless modem. The device may include user equipment (user equipment, UE), a wireless terminal, a mobile terminal, a device-to-device (device-to-device, D2D) terminal, a user terminal (user terminal), a user agent (user agent), a user device (user device), or the like. For example, the second device may include a mobile phone (or referred to as a "cellular" phone), a computer with a mobile terminal, or a portable, pocket-sized, handheld, or computer built-in mobile apparatus.
(7) Third device: A third device is a secondary node device that communicates with a second device, for example, a headset. By way of example, and not limitation, in embodiments of this application, the third device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, bands, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, the wearable intelligent devices include full-featured and large-sized devices that can implement all or some of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

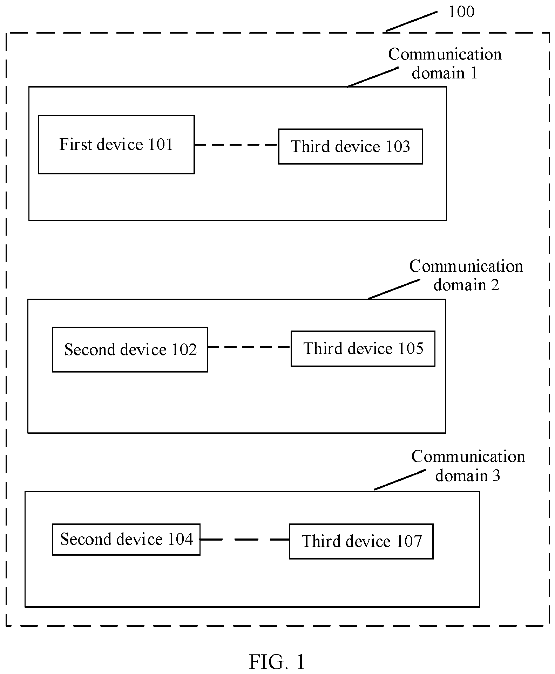

For ease of understanding embodiments of this application, a communication system applicable to embodiments of this application is first described in detail by using a communication system shown in FIG. 1 as an example. FIG. 1 is a schematic diagram of the communication system to which a communication method in embodiments of this application is applicable. As shown in FIG. 1, the communication system 100 includes a first device 101, a second device 102, a third device 103, and a third device 105. Optionally, the communication system may further include a second device 104 and a third device 107.

In the communication system 100, the first device 101 and the third device 103 may form a communication domain, and the first device 101 is a primary node in the communication domain. The second device 102 and the third device 105 may form a communication domain, and the second device 104 and the third device 107 may form a communication domain. The second device 102 and the second device 104 each are a primary node in the communication domains.

It should be understood that FIG. 1 is merely a simplified schematic diagram used as an example for ease of understanding. The communication system may further include another second device or another third device that is not shown in FIG. 1.

Currently, devices in an intelligent cockpit may include a CDC, a vehicle-mounted device such as a vehicle-mounted microphone, a vehicle-mounted speaker, or a vehicle-mounted screen, an intelligent terminal, a wearable device, and the like. As shown in FIG. 1, there are a plurality of different communication domains in the intelligent cockpit. A primary node in each communication domain is responsible for scheduling a communication resource for a secondary node, and the secondary node may communicate with the primary node by using the scheduled communication resource.

However, a conflict may occur between communication resources in the plurality of different communication domains. Consequently, severe interference is caused during communication, and communication performance of the devices is further affected.

In view of this, this application provides a communication method. The method may be applied to an intelligent cockpit environment, or may be applied to various communication systems, for example, a long term evolution (long term evolution, LTE) system, a short-distance communication system (for example, Bluetooth and Wi-Fi), a worldwide interoperability for microwave access (worldwide interoperability for microwave access, WiMAX) communication system, a 5th generation (5th Generation, 5G) system, and a future mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

The following explains and describes some nouns or terms used in this application, and the nouns or terms are also used as a part of the present invention.

### 1. Terminal device

A terminal device may be referred to as a terminal for short, or referred to as user equipment (user equipment, UE), and is a device having a wireless transceiver function. The terminal device may be deployed on land, where the deployment includes indoor or outdoor, or handheld or vehicle-mounted deployment, may be deployed on water (for example, on a ship), or may be deployed in air (for example, on aircraft, an unmanned aerial vehicle, a balloon, or a satellite). The terminal device may be a mobile phone, a tablet computer, a computer having a wireless transceiver function, a virtual-reality terminal device, an augmented-reality terminal device, a wireless terminal device in industrial control, a wireless terminal device in self-driving, a wireless terminal device in telemedicine, a wireless terminal device in a smart grid, a wireless terminal device in transportation safety, a wireless terminal device in a smart city, a wireless terminal device in a smart home, or the like. The terminal device may be fixed or mobile. This is not limited in embodiments of this application.

In embodiments of this application, an apparatus configured to implement a function of the terminal may be a terminal device, or may be an apparatus, for example, a chip system, that can support the terminal device in implementing the function. The apparatus may be installed in the terminal device. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal device is the terminal device.

### 2. Network device

A network device may be an access network device. The access network device may also be referred to as a radio access network (radio access network, RAN) device, and is a device that provides a wireless communication function for a terminal device. The access network device includes, for example, but is not limited to, a next generation NodeB (generation nodeB, gNB), an evolved NodeB (evolved nodeB, eNB), a baseband unit (baseband unit, BBU), a transmission reception point (transmission reception point, TRP), or a transmitting point (transmitting point, TP) in 5G, a base station in a future mobile communication system, or an access point in a Wi-Fi system. Alternatively, the access network device may be a radio controller, a centralized unit (centralized unit, CU), and/or a distributed unit (distributed unit, DU) in a cloud radio access network (cloud radio access network, CRAN) scenario, or the network device may be a relay station, a vehicle-mounted device, a network device in a future evolved PLMN network, or the like.

The terminal device may communicate with a plurality of access network devices by using different technologies. For example, the terminal device may communicate with an access network device supporting long term evolution (long term evolution, LTE), may communicate with an access network device supporting 5G, or may communicate with both an access network device supporting LTE and an access network device supporting 5G. This is not limited in embodiments of this application.

In embodiments of this application, an apparatus configured to implement a function of the network device may be a network device, or may be an apparatus, for example, a chip system, that can support the network device in implementing this function. The apparatus may be installed in the network device. In the technical solutions provided in embodiments of this application, the technical solutions provided in embodiments of this application are described by using an example in which the apparatus configured to implement the function of the network device is the network device.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

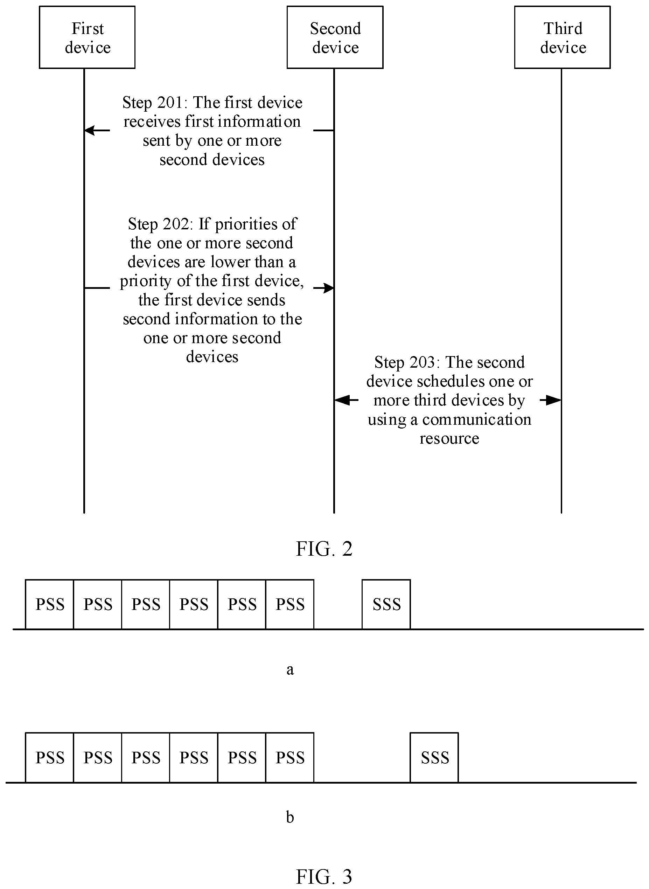

FIG. 2 is an example flowchart of a communication method from a device interaction perspective according to an embodiment of this application. As shown in FIG. 2, the method may include the following steps.

Step 201: One or more second devices send first information to a first device. Correspondingly, the first device receives the first information.

The first information may include priorities of the one or more second devices. The priority may indicate that the second device sending the first information is a primary node in a communication domain in which the second device is located, and at least one third device in the communication domain communicates with the second device. For example, first information A includes a priority of a second device a, and first information B includes a priority of a second device b. In this case, the priority may further indicate that the second device a and at least one third device form a communication domain, and the second device a is a primary node; and the second device b and at least one third device form a communication domain, and the second device b is a primary node. The following describes implementations of the priority.

### Implementation 1: The priority may be priority information.

In an example, the priority information may be priority indication information. For example, the indication information may be a priority identifier. For example, the priority information may be priority indication information. For example, the priority may be indicated by using a priority identifier and a correspondence between a priority identifier and a priority. The correspondence may be pre-stored by the first device, or may be predetermined by the first device and the second device, or may be defined in a protocol.

In another example, the priority information may be a priority index. The first device may maintain a correspondence between a priority index and a priority in advance. After receiving the first information sent by the one or more second devices, the first device may determine the priorities of the second devices in the correspondence between a priority index and a priority based on priority indexes included in the first information. The correspondence may also be pre-stored or specified in a protocol.

### Implementation 2: The priority may be identity information.

The identity information may be represented by using a device identification code or a media access control address (media access control address, MAC). It should be understood that different fields of the identity information may have different meanings.

In an embodiment, the first device may parse some or all fields of the device identification code or the MAC address to obtain priority information of the second device. For example, 2 bits (bit) of the device identification code may be used to indicate a device type. For example, 00 indicates a CDC, 01 indicates a mobile phone, and 10 indicates a wearable device. The first device may maintain a correspondence between a device type and a priority in advance. After receiving the first information sent by the second device, the first device may parse the device identification code to determine a device type of the second device, and determine the priority of the second device based on the correspondence between a device type and a priority.

In another embodiment, some fields of the device identification code or the MAC address may further include information identifying the priority of the second device. For example, the priority may be indicated by using 2 bits at a header or a tail of the device identification code. After receiving the first information sent by the second device, the first device may parse the header or the tail of the device identification code to obtain the priority of the second device.

In this embodiment of this application, the first information may be system message (system information), for example, a master information block (master information block, MIB) or a system information block (system information block, SIB). The second device may periodically send the first information by using system information. The MIB or the SIB herein may be sent in a broadcast or multicast form, and may be carried on a physical broadcast channel (physical broadcast channel, PBCH). Alternatively, the first information may be dedicated radio resource control (radio resource control, RRC) signaling, and the dedicated RRC signaling may be signaling used to send the first information.

In another embodiment, the first information may be carried in a physical signal sent by the second device. For example, the physical signal herein may include a primary synchronization signal (primary synchronization signal, PSS) and a secondary synchronization signal (secondary synchronization signal, SSS). Different priorities may correspond to different synchronization signal patterns. The pattern may indicate an interval between the PSS and the SSS, and physical signals with different intervals between the PSS and the SSS may indicate different priorities. For example, as shown in FIG. 3, an interval between a PSS and an SSS in a in FIG. 3 is 1, which may indicate the highest priority; and an interval between a PSS and an SSS in b in FIG. 3 is 2, which may indicate a priority that is lower than that in a in FIG. 3.

Step 202: The first device sends second information to the one or more second devices.

For example, the priorities of the one or more second devices are lower than a priority of the first device.

The second information herein may include a communication resource allocated by the first device to the one or more second devices, and the priority of the first device. The communication resource is a resource to be used by the one or more second devices to schedule one or more third devices. Each second device and one or more third devices may form a communication domain, and the second device is a primary node in the communication domain.

The second information may be system information (system information), for example, a master information block (master information block, MIB) or a system information block (system information block, SIB). The MIB or the SIB herein may be sent in a broadcast or multicast form, and may be carried on a physical broadcast channel (physical broadcast channel, PBCH). Alternatively, the first information may be radio resource control (radio resource control, RRC) signaling, and the RRC signaling may be signaling used to send the first information.

In this embodiment of this application, before performing step 202, the first device may further allocate the communication resource to the one or more second devices. The following describes methods for allocating the communication resource by the first device to the one or more second devices.

Method 1: The first device allocates a shared communication resource to the plurality of second devices.

For example, the first device may allocate one or more communication resources to all or some of the plurality of second devices. The first device may include the one or more communication resources in the second information, and send the second information to the second devices. As shown in FIG. 1, the first device 101 may allocate a shared communication resource to the second device 102 and the second device 104.

The communication resource allocated by the first device may include one or more resource blocks (resource block, RB), or the communication resource may include one or more sub-channels (channel). The second device 102 and the second device 104 may further select one or more communication resources in a monitoring manner. For example, the second information sent by the first device includes an RB 10 to an RB 25. The second device 102 monitors the RB 10 to the RB 25, determines the RB 10 to an RB 15 with lighter load, and invokes a third device based on the RB 10 to the RB 15. The second device 104 monitors the RB 10 to the RB 25, determines an RB 16 to the RB 25 with lighter load, and invokes a third device based on the RB 16 to the RB 25. Alternatively, the second information sent by the first device includes a communication resource A. The second device 102 and the second device 104 monitor a plurality of sub-channels of the communication resource A. The second device 102 selects a first sub-channel to invoke a third device, and the second device 104 selects a second sub-channel to invoke a third device. The first sub-channel and the second sub-channel herein may be different sub-channels.

In addition, it should be noted that if the first device allocates the communication resource to the plurality of second devices by using Method 1, that is, the communication resource included in the second information is the communication resource shared by the plurality of second devices, neither of the plurality of second devices may perform the foregoing step 201. In other words, the first device may broadcast the first information, and include the shared communication resource in the first information, instead of sending the second information after the first device receives the first information.

Method 2: The first device allocates a shared communication resource to second devices with a same priority.

After receiving the first information sent by the one or more second devices, the first device may determine the second devices with the same priority. The first device may allocate the shared communication resource to the determined second devices with the same priority. For example, the first device separately receives first information sent by a second device 1, a second device 2, a second device 3, and a second device 4. The first device may separately determine a priority of each second device based on first information from each second device. For example, the first device determines that priorities of the second device 1 and the second device 2 are the same, and priorities of the second device 3 and the second device 4 are the same. In this case, the first device may allocate one or more shared communication resources to the second device 1 and the second device 2, and the first device may allocate one or more shared communication resources to the second device 3 and the second device 4. The first device may include, in the second information, priorities and allocated communication resources corresponding to the priorities. The shared communication resource herein may be the communication resource to be jointly used by the second devices with the same priority.

The communication resource allocated by the first device may include one or more resource blocks (resource block, RB), or the communication resource may include one or more sub-channels (channel). The second devices with the same priority may select, in a monitoring manner, the communication resource allocated by the first device. For example, the second device 1 and the second device 2 each may monitor the shared communication resource, and select an RB with lighter load or a sub-channel with lighter load to invoke a third device. RBs or sub-channels selected by the second device 1 and the second device 2 may be different.

Method 3: The first device may allocate a communication resource to each second device.

After receiving the first information sent by the one or more second devices, the first device may allocate, to all the second devices, second resources that do not conflict with each other. For example, the first device may allocate the communication resources to the one or more second devices in descending order of the priorities of the second devices. The first device may include, in the second information, the identity information of the second devices and the communication resources allocated to the second devices.

In this embodiment of this application, the first device may allocate the communication resource to the one or more second devices when determining that a first condition is met. Because the communication resource allocated by the first device is dedicated for the one or more second devices to schedule a third device, another device cannot perform communication by using the communication resource. Therefore, if the first device allocates the communication resource to the one or more second devices only when determining that the first condition is met, resource utilization can be improved. The following specifically describes implementations of the first condition.

First condition 1: A signal strength of the first information is higher than or equal to a first signal strength threshold.

In an embodiment, when receiving the first information sent by the one or more second devices, the first device may determine a signal strength of first information sent by each second device. The first device may compare the determined signal strength of the first information sent by each second device with the first signal strength threshold, to determine a second device corresponding to first information whose signal strength is higher than or equal to the first signal strength threshold. The first device may allocate the communication resource to the determined second device. When sending the second information, the first device may include identity information of the determined second device in the second information, to indicate specific second devices to which the first device allocates the communication resource.

In another embodiment, when receiving the first information sent by the one or more second devices, the first device may determine a signal strength of first information sent by each second device. When determining that signal strength of at least one piece of first information is higher than or equal to the first signal strength threshold, the first device sends the second information. The second information includes the shared communication resource allocated to the one or more second devices whose priorities are lower than that of the first device.

In still another embodiment, when receiving the first information sent by the one or more second devices, the first device may determine the signal strength of the first information sent by the second devices and a priority of each second device. If the signal strength of the first information is higher than or equal to the first signal strength threshold, and the priority of the second device is a specified priority, the first device may send the second information, where the second information includes the shared communication resource allocated to the one or more second devices with the specified priority.

First condition 2: An amount of the first information is greater than or equal to a first quantity threshold.

In an embodiment, when receiving the first information, the first device may record the amount of the received first information. For example, the first device may maintain a counter in advance, and the counter may be configured to record the amount of the received first information. For example, an initial value of the counter is 0, and the counter is incremented by 1 when one piece of first information is received. The first device may send the second information when a value of the counter is greater than or equal to the first quantity threshold.

In addition, it should be noted that the amount of the first information herein may be amounts of first information sent by different second devices, or may be a total amount of first information. The total amount of first information may include an amount of a plurality of pieces of first information sent by a same second device.

In another embodiment, the first device may determine the priorities of the one or more second devices based on the received first information. The first device sends the second information if determining that a quantity of second devices with a specified priority is greater than the first quantity threshold. The second information may include the shared communication resource allocated by the first device to the one or more second devices with the specified priority. The specified priority herein may be predetermined based on an empirical value or defined in a protocol, for example, may be a first priority, or may be a priority lower than that of the first device. This is not specifically limited in this application.

First condition 3: First duration in which the first device continuously receives first information sent by a same second device is longer than or equal to a first duration threshold.

The first information herein may be periodic information. Therefore, continuous receiving may mean that for one second device, timing starts when the first device receives the first information for the first time. If the first device receives, in each period, the first information sent by the same second device, timing may be performed continuously. When timing duration reaches the first duration threshold, the first device may allocate the communication resource to the second device. If the first device does not receive, in a period, the first information sent by the same second device, timing may be stopped.

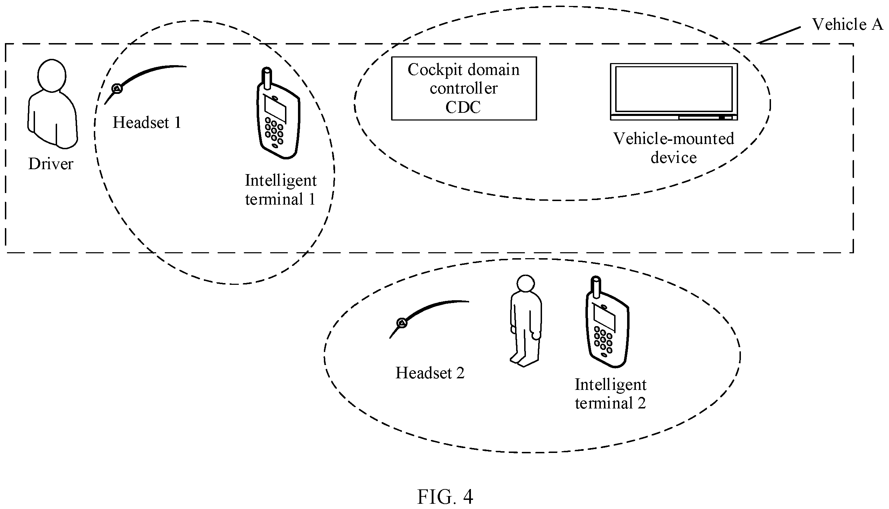

For example, as shown in FIG. 4, in a vehicle A, an intelligent terminal 1 and a headset 1 of a driver form a communication domain, and a CDC and a vehicle-mounted device form a communication domain. In this case, a pedestrian is passing by the vehicle A. An intelligent terminal 2 and a headset 2 of the pedestrian that are communicating with each other form a communication domain. In this case, the intelligent terminal 1 and the intelligent terminal 2 periodically broadcast first information. The CDC may start timing separately when receiving the first information. For example, the CDC starts a first timer when receiving the first information broadcast by the intelligent terminal 1, and starts a second timer when receiving the first information broadcast by the intelligent terminal 2. At a moment, the pedestrian passes by the vehicle A, and is gradually away from the vehicle A. Therefore, the CDC cannot receive the first information broadcast by the intelligent terminal 2. Therefore, the second timer stops timing. The first timer keeps timing, and stops timing when timing duration reaches the first duration threshold, and then the first device sends the second information. The second information includes a communication resource allocated by the first device to the intelligent terminal 1. It should be understood that the communication resource may alternatively be a communication resource shared by the intelligent terminal 1 and another second device with a same priority.

First condition 4: A total quantity of times that the first device receives first information sent by a same second device is greater than or equal to a first quantity-of-times threshold.

The first information herein may be periodic information. For a second device, if the first device receives the first information broadcast by the second device, the first device may increase a quantity of times corresponding to the second device by 1. An initial quantity of times corresponding to each second device may be 0. If a recorded quantity of times is greater than or equal to the first quantity-of-times threshold, the first device may allocate a communication resource to the corresponding second device. When sending the second information, the first device may include identity information of the second device in the second information, to indicate specific second devices to which the communication resource is allocated.

For example, as shown in FIG. 4, in a vehicle A, an intelligent terminal 1 and a headset 1 of a driver form a communication domain, and a CDC and a vehicle-mounted device form a communication domain. In this case, a pedestrian is passing by the vehicle A. An intelligent terminal 2 and a headset 2 of the pedestrian that are communicating with each other form a communication domain. In this case, the intelligent terminal 1 and the intelligent terminal 2 periodically broadcast first information. The CDC may start a first counter when receiving the first information broadcast by the intelligent terminal 1, and start a second counter when receiving the first information broadcast by the intelligent terminal 2. At a moment, the pedestrian passes by the vehicle A, and is gradually away from the vehicle A. Therefore, the CDC cannot receive the first information broadcast by the intelligent terminal 2. Therefore, the second counter stops counting. The first counter may keep counting. The first device may send the second information when a value of the first counter is greater than or equal to the first quantity-of-times threshold. The second information includes a communication resource allocated by the first device to the intelligent terminal 1. It should be understood that the communication resource may alternatively be a communication resource shared by the intelligent terminal 1 and another second device with a same priority.

First condition 5: A conflict occurs between a communication resource in a communication domain to which the first device belongs and a communication resource in a communication domain to which each of the one or more second devices belongs.

In an embodiment, when a conflict occurs between communication resources in two communication domains, higher channel load usually exists on a conflict resource block. Therefore, the first device measures channel load on the communication resource, to determine whether a first resource whose channel load is heavier than or equal to a first channel load threshold exists. The first device may send the second information if determining that the first resource exists. The second information may include the communication resource allocated to the one or more second devices whose priorities are lower than that of the first device. The first channel load threshold herein may be predetermined based on an empirical value or defined in a protocol. This is not specifically limited in this application.

In another embodiment, the first device may determine, based on a communication resource that is broadcast by the second device and that is used in a communication domain to which the second device belongs, whether a conflict occurs between communication resources. For example, if a second device 1 broadcasts a communication resource RB 15 to RB 30, and the communication resource used in the communication domain to which the first device belongs also includes the RB 15 to the RB 30, the first device may determine that the conflict occurs between the communication resources. Therefore, the first device may send the second information.

In addition, it should be noted that, in this embodiment of this application, any plurality of First condition 1 to First condition 5 may be appropriately combined. For example, First condition 1 and First condition 3 may be combined. When the first duration in which the first device continuously receives first information that is sent by a same second device and whose signal strength is higher than or equal to the first signal strength threshold is longer than or equal to the first duration threshold, the first device may send the second information.

Step 203: The second device schedules the one or more third devices by using the communication resource.

The second device may communicate with the one or more third devices by using the communication resource. As shown in FIG. 1, the second device 102 may communicate with the third device 103 by using a communication resource allocated by the first device 101.

Based on the foregoing solution, the first device may allocate the communication resource to the one or more second devices. This can avoid the conflict occurring between communication resources in different communication domains, reduce interference between the communication domains, and improve communication performance of the devices.

In this embodiment of this application, the first device may further reclaim the allocated communication resource, and the first device may allocate the reclaimed communication resource to one or more other second devices. When a second condition is met, the first device may send third information to reclaim the communication resource. The third information herein may be system information, for example, a MIB or a SIB. The third information may include the priority of the first device. The following describes methods for implementing the second condition.

Second condition 1: The first information sent by the one or more second devices is not received within a predetermined time.

When the first device does not receive the first information within the predetermined time, there may be no other communication domain in an environment. Therefore, the first device does not need to allocate a communication resource to a primary node, namely, a second device, in another communication domain, and the first device may send the third information. Optionally, if the amount of the first information received by the first device is less than a second threshold, the first device may also send the third information. When the amount of the first information is less than the second threshold, a quantity of other communication domains in an environment may be relatively small. Therefore, the first device does not need to allocate a communication resource to a primary node, namely, a second device, in another communication domain, and the first device may send the third information.

The predetermined time may be predetermined based on an empirical value or defined in a protocol, for example, may be 10s. The predetermined time may be related to a period in which the second device sends the first information. This is not specifically limited in this application.

Second condition 2: The first information received by the first device is not related to a second device with a specified priority.

If the first information received by the first device is not related to the second device with the specified priority, there may be no primary node with the specified priority in an environment. Therefore, the first device may not need to allocate a communication resource to the primary node, namely, the second device, with the specified priority. Optionally, when a total quantity of second devices with the specified priority that are related to the first information received by the first device is less than a second quantity threshold, the first device may send the third information.

The second quantity threshold may be predetermined based on an empirical value or defined in a protocol. This is not specifically limited in this application.

Second condition 3: The signal strength of the first information is lower than a second strength threshold.

If the signal strength of the first information is lower than the second strength threshold, a distance between the second device that sends the first information and the first device may be relatively long. Therefore, the first device may not allocate the communication resource to the second device. The first device may send the third information, to reclaim the allocated communication resource.

Based on the foregoing solution, the first device may send the third information to reclaim the communication resource that has been allocated to the one or more second devices, and may re-allocate the reclaimed communication resource. This can improve utilization of the communication resource.

It should be understood that, any plurality of Second condition 1 to Second condition 3 may be combined. For example, Second condition 2 and Second condition 3 may be combined. When the signal strength of the first information received by the first device is lower than the second strength threshold, and the first information is not related to the second device with the specified priority, the first device may send the third information.

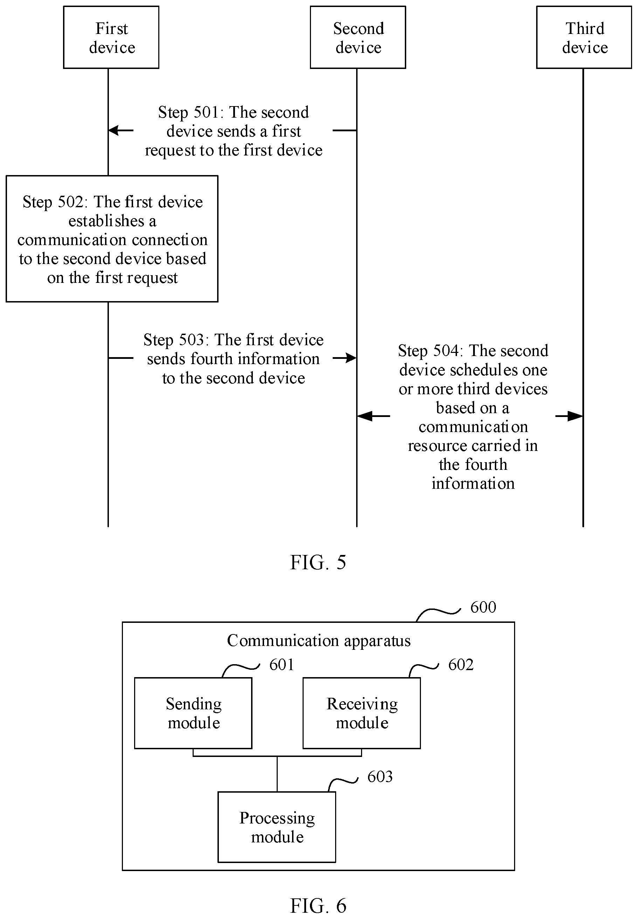

An embodiment of this application further provides another communication method. FIG. 5 is an example flowchart of a communication method from a device interaction perspective according to an embodiment of this application. The method may include the following steps.

Step 501: A second device sends a first request to a first device.

The first request herein may be a request for requesting the first device to establish a connection, and the first request may include a priority of the second device. For related description of the priority, refer to the description of the method embodiment in FIG. 2. Details are not described herein again. It should be understood that the second device may send the first request by using RRC signaling, and the RRC signaling may be newly added signaling used to send the first request.

Step 502: The first device establishes the communication connection to the second device after receiving the first request.

In an embodiment, the priority in the first request may be identity information, and the first device may perform identity authentication on the second device based on the identity information. For example, the first device may pre-store an identity information table. If the first device can find the identity information in the first request in the identity information table, the first device allows access of the second device, and establishes the communication connection to the second device.

Step 503: The first device sends fourth information to the second device.

The fourth information herein includes one or more communication resources allocated by the first device to the second device. The first device may send, to the second device, the fourth information including the one or more communication resources. The first device may send the fourth information to the second device by using RRC signaling. The RRC signaling herein may be newly added RRC signaling used to send the fourth information.

The first device may allocate the one or more communication resources to the second device based on the priority included in the first request. For example, the first device may allocate communication resources to second devices in descending order of priorities. Alternatively, the first device may allocate a shared communication resource to one or more second devices. For a specific implementation, refer to related descriptions of the method embodiment in FIG. 2.

Step 504: The second device schedules one or more third devices by using the communication resources carried in the fourth information.

For related descriptions of the third device, refer to the descriptions of the method embodiment in FIG. 2. Details are not described herein again. In addition, it should be noted that, after receiving the fourth information sent by the first device, the second device may disconnect the communication connection to the first device, and schedule the one or more third devices based on the one or more communication resources.

Based on the foregoing solution, the first device can establish the communication connection to the second device, and send, to the second device, the communication resource allocated to the second device. Therefore, the second device may schedule the one or more third devices by using the communication resource. This can reduce interference caused by a conflict between communication resources, and improve communication performance of the devices.

In embodiments provided in this application, the methods provided in embodiments of this application are described from perspectives of the first device, the second device, and interaction between the first device and the second device. To implement the functions in the methods provided in embodiments of this application, the network device and the terminal device each may include a hardware structure and/or a software module, and implement the functions in a form of the hardware structure, the software module, or a combination of the hardware structure and the software module. Whether a function in the foregoing functions is performed in a form of a hardware structure, a software module, or both a hardware structure and a software module depends on a specific application and a design constraint condition of the technical solutions.

Same as the foregoing concept, as shown in FIG. 6, an embodiment of this application further provides a communication apparatus 600. The communication apparatus can implement functions of the first device or the second device in the foregoing method embodiments, and therefore can also implement beneficial effects of the foregoing method embodiments. The communication apparatus 600 includes a sending module 601 and a receiving module 602, and optionally, may further include a processing module 603.

In an example, the apparatus 600 is configured to implement the functions of the first device in the foregoing method. For example, the apparatus may be a CDC device, or may be an apparatus in the CDC device, for example, a chip system.

The receiving module 602 is configured to receive first information sent by one or more second devices, where the first information includes priorities of the one or more second devices. The sending module 601 is configured to: if the priorities of the one or more second devices are lower than a priority of the apparatus, send second information to the one or more second devices, where the second information includes a communication resource allocated by the apparatus to the one or more second devices and the priority of the apparatus. Optionally, the processing module 603 is configured to allocate the communication resource to the one or more second devices, where the communication resource is to be used by the one or more second devices to schedule one or more third devices. For related descriptions of the priority and the communication resource, refer to the descriptions in the foregoing method embodiments. Details are not described herein again.

In an example, the apparatus 600 is configured to implement the functions of the second device in the foregoing method. The apparatus may be a terminal device, or may be an apparatus in the terminal device, such as a chip system.

The sending module 601 is configured to send first information to a first device. The receiving module 602 is configured to: if a priority of the apparatus is lower than a priority of the first device, receive second information sent by the first device. The processing module 603 is configured to schedule one or more third devices based on a communication resource. For related descriptions of the priority and the communication resource, refer to the descriptions in the foregoing method embodiments. Details are not described herein again.

For specific execution processes of the processing module 603, the sending module 601, and the receiving module 602, refer to the descriptions in the foregoing method embodiments. Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

As another optional variation, the apparatus may be a chip system. In this embodiment of this application, the chip system may include a chip, or may include a chip and another discrete component. For example, the apparatus includes a processor and an interface, and the interface may be an input/output interface. The processor implements a function of the processing module 603. The interface implements functions of the sending module 601 and the receiving module 602. The apparatus may further include a memory. The memory is configured to store a program that may be run on the processor, and the processor implements the methods in the foregoing embodiments when executing the program.

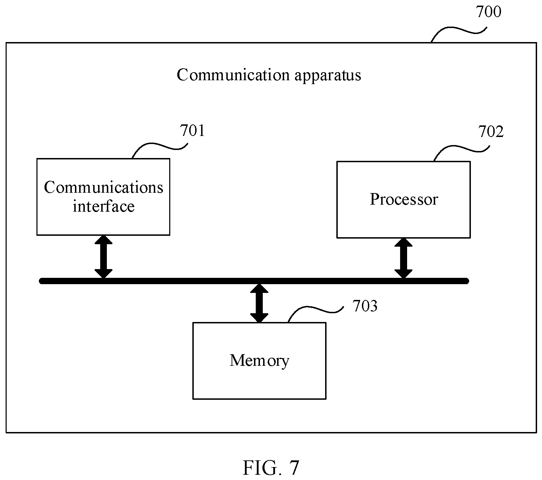

Same as the foregoing concept, as shown in FIG. 7, an embodiment of this application further provides a communication apparatus 700. The apparatus 700 includes a communications interface 701, at least one processor 702, and at least one memory 703. The communications interface 701 is configured to communicate with another device through a transmission medium, so that an apparatus in the apparatus 700 can communicate with the another device. The memory 703 is configured to store a computer program. The processor 702 invokes the computer program stored in the memory 703, to send and receive data through the communications interface 701, to perform the method in the foregoing embodiments.

For example, when the apparatus 700 is a first device, the memory 703 is configured to store the computer program. The processor 702 invokes the computer program stored in the memory 703, to perform the methods performed by the first device in the foregoing embodiments. When the apparatus 700 is a second device, the memory 703 is configured to store the computer program. The processor 702 invokes the computer program stored in the memory 703, to perform the methods performed by the second device in the foregoing embodiments.

In this embodiment of this application, the communications interface 701 may be a transceiver, a circuit, a bus, a module, or a communications interface of another type. The processor 702 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. Steps of the methods disclosed with reference to embodiments of this application may be directly performed and completed by using a hardware processor, or may be performed and completed by using a combination of hardware and software modules in the processor. The memory 703 may be a non-volatile memory, for example, a hard disk drive (hard disk drive, HDD) or a solid-state drive (solid-state drive, SSD), or a volatile memory (volatile memory), for example, a random-access memory (random-access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function. The memory 703 is coupled to the processor 702. Coupling in this embodiment of this application is indirect coupling or a communication connection between apparatuses, units, or modules, may be in an electrical form, a mechanical form, or another form, and is used for information exchange between apparatuses, units, or modules. In another implementation, the memory 703 may alternatively be located outside the apparatus 700. The processor 702 may cooperate with the memory 703. The processor 702 may execute program instructions stored in the memory 703. At least one of the at least one memory 703 may alternatively be included in the processor 702. In this embodiment of this application, a specific connection medium between the communications interface 701, the processor 702, and the memory 703 is not limited. For example, in this embodiment of this application, the memory 703, the processor 702, and the communications interface 701 may be connected through a bus in FIG. 7. The bus may be classified into an address bus, a data bus, a control bus, and the like.

It may be understood that the apparatus 600 in the embodiment shown in FIG. 6 may be implemented by the apparatus 700 shown in FIG. 7. Specifically, the processing module 603 may be implemented by the processor 702, and the sending module 601 and the receiving module 602 may be implemented by the communications interface 701.

All or some of the methods in embodiments of this application may be implemented by using software, hardware, firmware, or any combination thereof. When software is used to implement embodiments, some or all of embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, a solid-state drive (Solid-State Drive, SSD)), or the like.

The foregoing embodiments are merely used to describe the technical solutions of this application in detail. The descriptions of the foregoing embodiments are merely intended to help understand the methods according to embodiments of the present invention, and shall not be construed as any limitation on embodiments of the present invention. Variations or replacements readily figured out by a person skilled in the art shall fall within the protection scope of embodiments of the present invention.

## Claims

1. A communication method, comprising:
receiving, by a first device, first information sent by one or more second devices, wherein the first information comprises priorities of the one or more second devices; and
if the priorities of the one or more second devices are lower than a priority of the first device, sending, by the first device, second information to the one or more second devices, wherein the second information comprises a communication resource allocated by the first device to the one or more second devices and the priority of the first device.

2. The method according to claim 1, wherein before the sending, by the first device, second information to the one or more second devices, the method further comprises:
allocating, by the first device, the communication resource to the one or more second devices, wherein the communication resource is to be used by the one or more second devices to schedule one or more third devices.

3. The method according to claim 1 or 2, wherein the priorities of the one or more second devices are identity information of the one or more second devices.

4. The method according to any one of claims 1 to 3, wherein the communication resource is a communication resource shared by the plurality of second devices.

5. The method according to claim 4, wherein the allocating, by the first device, the communication resource to the plurality of second devices comprises:
allocating, by the first device, a shared communication resource to a plurality of second devices with a same priority.

6. The method according to any one of claims 1 to 5, wherein the sending, by the first device, second information to the one or more second devices comprises:
sending, by the first device, the second information to the one or more second devices when a first condition is met.

7. The method according to claim 6, wherein the first condition comprises:
a signal strength of the first information is higher than or equal to a first signal strength threshold; or
an amount of the first information is greater than or equal to a first quantity threshold; or
first duration in which the first device continuously receives first information sent by a same second device is longer than or equal to a first duration threshold; or
a total quantity of times that the first device receives first information sent by a same second device is greater than or equal to a first quantity-of-times threshold.

8. The method according to any one of claims 1 to 7, further comprising:
sending, by the first device, third information when determining that the first information sent by the one or more second devices is not received within a predetermined time or the signal strength of the first information is lower than a second signal strength threshold, wherein the third information comprises the priority of the first device.

9. A communication method, comprising:
sending, by a second device, first information to a first device, wherein the first information comprises a priority of the second device;
if the priority of the second device is lower than a priority of the first device, receiving, by the second device, second information sent by the first device, wherein the second information comprises a communication resource allocated by the first device to the second device and the priority of the first device; and
scheduling, by the second device, one or more third devices by using the communication resource.

10. The method according to claim 9, wherein the priority information is identity information of the second device.

11. The method according to claim 9 or 10, wherein the communication resource is a communication resource shared by the second device and one or more other second devices.

12. The method according to claim 11, wherein the communication resource is a communication resource shared by the second device and one or more second devices with a same priority in the one or more other second devices.

13. The method according to any one of claims 9 to 12, further comprising:
receiving, by the second device, third information sent by the first device, wherein the third information comprises priority information of the first device; and
sending, by the second device, the first information to the first device.

14. A communication apparatus, comprising:
a receiving module, configured to receive first information sent by one or more second devices, wherein the first information comprises priorities of the one or more second devices; and
a sending module, configured to: if the priorities of the one or more second devices are lower than a priority of the apparatus, send second information to the one or more second devices, wherein the second information comprises a communication resource allocated by the apparatus to the one or more second devices and the priority of the apparatus.

15. The apparatus according to claim 14, wherein the apparatus further comprises:
a processing module, configured to allocate the communication resource to the one or more second devices, wherein the communication resource is to be used by the one or more second devices to schedule one or more third devices.

16. The apparatus according to claim 14 or 15, wherein the priorities of the one or more second devices are identity information of the one or more second devices.

17. The apparatus according to any one of claims 15 to 16, wherein the communication resource is a communication resource shared by the plurality of second devices.

18. The apparatus according to claim 17, wherein when allocating the communication resource to the plurality of second devices, the processing module is specifically configured to:
allocate a shared communication resource to a plurality of second devices with a same priority.

19. The apparatus according to any one of claims 14 to 18, wherein when sending the second information to the one or more second devices, the sending module is specifically configured to:
send the second information to the one or more second devices when the processing module determines that a first condition is met.

20. The apparatus according to claim 19, wherein the first condition comprises:
a signal strength of the first information is higher than or equal to a first signal strength threshold; or
an amount of the first information is greater than or equal to a first quantity threshold; or
first duration in which the apparatus continuously receives the first information is longer than or equal to a first duration threshold; or
a total quantity of times that the apparatus receives the first information sent by a same second device is greater than a first quantity-of-times threshold.

21. The apparatus according to any one of claims 14 to 20, wherein the processing module is further configured to:
send third information by using the sending module when it is determined that the first information sent by the one or more second devices is not received within a predetermined time or the signal strength of the first information is lower than a second signal strength threshold, wherein the third information comprises the priority of the apparatus.

22. A communication apparatus, comprising:
a sending module, configured to send first information to a first device, wherein the first information comprises a priority of the apparatus;
a receiving module, configured to: if the priority of the apparatus is lower than a priority of the first device, receive second information sent by the first device, wherein the second information comprises a communication resource allocated by the first device to the apparatus and the priority of the first device; and
a processing module, configured to schedule one or more third devices by using the communication resource.

23. The apparatus according to claim 22, wherein the priority information is identity information of the apparatus.

24. The apparatus according to claim 22 or 23, wherein the communication resource is a communication resource shared by the apparatus and one or more other communication apparatuses.

25. The apparatus according to claim 24, wherein the communication resource is a communication resource shared by the apparatus and one or more apparatuses with a same priority in the one or more other communication apparatuses.

26. The apparatus according to any one of claims 22 to 25, wherein the receiving module is further configured to receive third information sent by the first device, and the third information comprises priority information of the first device; and
the sending module is further configured to send the first information to the first device.

27. A communication apparatus, comprising a processor and a memory, wherein
the memory is configured to store a computer program or instructions; and
the processor is configured to execute the computer program or instructions stored in the memory, so that the method according to any one of claims 1 to 8 is performed or the method according to any one of claims 9 to 13 is performed.

28. A computer-readable storage medium, wherein the computer-readable storage medium stores a computer program, and when the computer program is run, the method according to any one of claims 1 to 8 is implemented or the method according to any one of claims 9 to 13 is implemented.
